(19) Europäisches Patentamt
European Patent Office
Office européen des brevets

(11) EP 1 435 303 B1

(12) # FASCICULE DE BREVET EUROPEEN

(45) Date de publication et mention de la délivrance du brevet:
**28.07.2010 Bulletin 2010/30**

(51) Int Cl.:
***B60C 23/06*** *(2006.01)*

(21) Numéro de dépôt: **03293154.5**

(22) Date de dépôt: **15.12.2003**

(54) **Procédé et système d'indication d'un sous-gonflage d'un pneu et support d'enregistrement d'informations pour la mise en oeuvre du procédé**

Verfahren und Vorrichtung zur Anzeige eines Reifenunterdrucks und Informationsaufzeichnungsmedium zur Durchführung des Verfahrens

Method and device for indicating a tire under-inflation and informations recording medium for carrying out said method

(84) Etats contractants désignés:
**AT BE BG CH CY CZ DE DK EE ES FI FR GB GR HU IE IT LI LU MC NL PT RO SE SI SK TR**

(30) Priorité: **20.12.2002 FR 0216407**

(43) Date de publication de la demande:
**07.07.2004 Bulletin 2004/28**

(73) Titulaire: **Peugeot Citroën Automobiles S.A.**
**78140 Vélizy Villacoublay (FR)**

(72) Inventeurs:
- **Pigot, Etienne**
  **78960 Voisins-Le-Bretonneux (FR)**
- **Moriceau, Stéphane**
  **91370 Verrieres-Le-Buisson (FR)**
- **Mougin, Jean-Francois**
  **90000 Belfort (FR)**

(56) Documents cités:
**EP-A- 0 712 740**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 435 303 B1

## Description

L'invention concerne un procédé d'indication d'un sous-gonflage d'un pneu d'une roue d'un véhicule automobile en cas de détection d'une variation anormale du nombre de tours de roue réalisés sur une distance donnée.

L'invention a également pour objet un système d'indication d'un sous-gonflage d'un pneu d'un véhicule ainsi qu'un support d'enregistrement d'informations contenant des instructions pour l'exécution du procédé.

Il est connu qu'un pneu dont la pression est inférieure à une valeur nominale présente un développé de roue réduit et par conséquent, un périmètre plus petit. Pour cette raison, il doit faire plus de tours que les autres pneus normalement gonflés pour couvrir une même distance.

Cette propriété est utilisée dans des systèmes connus pour indiquer un sous-gonflage d'un pneu sans utiliser à cet effet de capteurs de pression associés à ce pneu. FR-A-2 568 519 décrit un tel système. Dans ce document, le nombre de tours réalisés par chaque roue pendant un intervalle de temps donné ou pour une distance connue est mesuré pour chaque roue. De plus, le système comporte les éléments suivants :

- des moyens permettant d'additionner un signal proportionnel au nombre de tours de la roue avant gauche à un signal proportionnel au nombre de tours de la roue arrière droite de sorte qu'on obtient un signal "$d_1$" d'une diagonale,
- des moyens permettant d'additionner un signal proportionnel au nombre de tours de la roue avant droite à un signal proportionnel au nombre de tours de la roue arrière gauche, de sorte qu'on obtient un signal "$d_2$" de l'autre diagonale,
- des moyens permettant d'obtenir la différence des deux signaux de diagonale de sorte qu'on dispose d'un signal "d" de différence des diagonales,
- des moyens d'analyse dudit signal "d" de différence des diagonales en relation avec un signal "p" proportionnel à la distance de déplacement du véhicule pour fournir un signal d'alerte lorsque la valeur dudit signal "d" dépasse un seuil critique.

Les mesures réalisées pour les roues diagonalement opposées sont cumulées de manière à compenser les écarts de nombre de tours de roue entre deux pneus normalement gonflés qui apparaissent lorsque le véhicule réalise un virage. En effet, lors d'un virage, les roues à l'intérieur et à l'extérieur du virage ne parcourent pas la même distance de sorte qu'un biais de mesure apparaît.

Les documents EP-A-0712740 et EP-A-1336513 décrivant également des procédés d'indication d'un sous-gonflage d'un pneu, le document EP-A-1336513 relevant de l'article 54(3) CBE.

L'invention vise à proposer un procédé alternatif d'indication d'un sous-gonflage d'un pneu d'au moins une roue d'un véhicule automobile dans lequel les biais de mesure dus au virage ne sont pas compensés par une étape de cumul des mesures réalisées pour des roues diagonalement opposées.

L'invention a donc pour objet un procédé d'indication d'un sous-gonflage d'un pneu d'une roue tel que décrit dans la revendication 1.

Dans le procédé selon l'invention, le rayon de courbure de la trajectoire suivie par chaque roue est relevé. La distance parcourue par une roue dans un virage est fonction du rayon de courbure de la trajectoire suivie par cette roue. Par conséquent, la différence des distances parcourues par deux roues lors d'un virage est également une fonction des rayons de courbure des trajectoires de ces roues. L'écart entre les nombres de tours de roue mesurés dans un virage qui est du à la différence des distances parcourues par chacune des roues est donc lui aussi une fonction du rayon de courbure de la trajectoire de ces roues.

Dès lors, connaissant les rayons de courbure de la trajectoire des roues, le procédé ci-dessus corrige les écarts entre les nombres de tours de roue mesurés lors d'un virage pour les différentes roues du véhicule automobile. Ainsi, dans ce procédé, il n'est pas nécessaire de recourir à une étape de cumul des nombres de tours de roue mesurés pour des roues diagonalement opposées du véhicule automobile de manière à corriger les biais de mesure dus à un virage.

Suivant d'autres caractéristiques du procédé conforme à l'invention :

- l'étape de correction consiste à corriger les nombres de tours de roue mesurés pour que ceux-ci correspondent aux nombres de tours qui auraient été mesurés si toutes les roues avaient parcouru une même distance de référence ;
- il comporte une étape de mesure de la distance parcourue par le véhicule automobile, et la distance de référence est choisie égale à la distance parcourue par le véhicule ;
- il comporte une étape de calcul des écarts entre le nombre de tours de roue mesuré pour une roue de référence et les nombres de tours de roue mesurés et corrigés pour les autres roues du véhicule automobile de manière à détecter ladite variation anormale du nombre de tours de roue ;
- l'étape de relevé, pour chaque roue, d'une information représentative du rayon de courbure de la trajectoire suivie par cette roue comporte :
  - une opération de mesure de la position angulaire du volant de direction du véhicule, et
  - une opération de détermination du rayon de courbure de la trajectoire de chaque roue du véhicule à partir de la position angulaire du volant mesurée ;

- il comporte :

  - une étape d'acquisition d'une information représentative de l'accélération latérale du véhicule automobile, et
  - une seconde étape de correction à l'aide de cette information, des nombres de tours de roue mesurés de manière à compenser les écarts entre les nombres de tours de roue mesurés pour chaque roue dus à l'accélération latérale du véhicule lors d'un virage ;
  - la seconde étape de correction comporte une opération de calcul de la répartition du poids du véhicule automobile sur chacune des roues en fonction de la valeur de l'information représentative de l'accélération latérale,
  - l'étape de mesure du nombre de tours de roue, l'étape de relevé d'une information représentative du rayon de courbure et/ou l'étape d'acquisition d'une information représentative de l'accélération latérale est inhibée si l'un des pneus du véhicule automobile glisse sur la chaussée.

L'invention a également pour objet un support d'enregistrement d'informations contenant des instructions pour l'exécution d'un procédé d'indication d'un sous-gonflage d'au moins un pneu d'une roue d'un véhicule automobile conforme à l'invention, lorsque lesdites instructions sont exécutées par un calculateur électronique.

L'invention a également pour objet un système d'indication d'un sous-gonflage d'un pneu d'une roue d'un véhicule automobile en cas de détection d'une variation anormale du nombre de tours de roue réalisés sur une distance donnée tel que décrit dans la revendication 8.

Suivant d'autres caractéristiques d'un système conforme à l'invention :

- les moyens pour relever une information représentative du rayon de courbure de la trajectoire suivie par chacune des roues comportent un capteur de la position angulaire du volant du véhicule automobile ;
- il comporte des moyens d'acquisition d'une information représentative de l'accélération latérale du véhicule automobile, et le calculateur est apte à corriger les nombres de tours de roue mesurés de manière à compenser les écarts entre les nombres de tours de roue mesurés pour chaque roue dus à l'accélération latérale du véhicule lors d'un virage.

L'invention sera mieux comprise à la lecture de la description qui va suivre, donnée uniquement à titre d'exemple, et faite en se référant aux dessins sur lesquels :

- la figure 1 est une illustration schématique de l'architecture d'un système de surveillance de la pression pneumatique des roues d'un véhicule automobile conforme à l'invention, et
- la figure 2 est un organigramme d'un procédé d'indication d'un sous-gonflage d'un pneu conforme à l'invention;

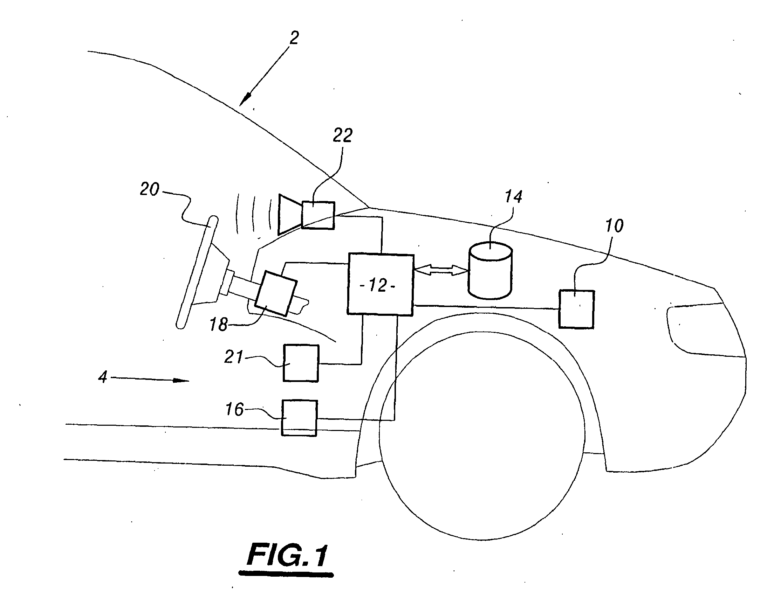

La figure 1 représente un véhicule automobile 2 équipé d'un système de surveillance de la pression pneumatique des roues du véhicule 2, désigné par la référence générale 4.

Le système 4 comporte un capteur 10 du nombre de tours réalisés par chacune des roues du véhicule 2 ainsi qu'un calculateur électronique 12 associé à ce capteur 10.

Pour simplifier la figure 1, le capteur 10 est représenté comme une seule entité. En réalité, le capteur 10 est formé de quatre unités de mesure indépendantes les unes des autres et associées chacune à leur roue respective.

Avantageusement, le capteur 10 est réalisé à partir des capteurs déjà existants soit d'un système de freinage ABS (Anti-Blocking System) soit à partir de ceux existants dans un système de stabilisation ESP (Electronic Stability Program).

Un système ESP est destiné à stabiliser le véhicule lors des virages en agissant sur les freins et/ou sur le couple moteur et/ou sur les caractéristiques de la suspension.

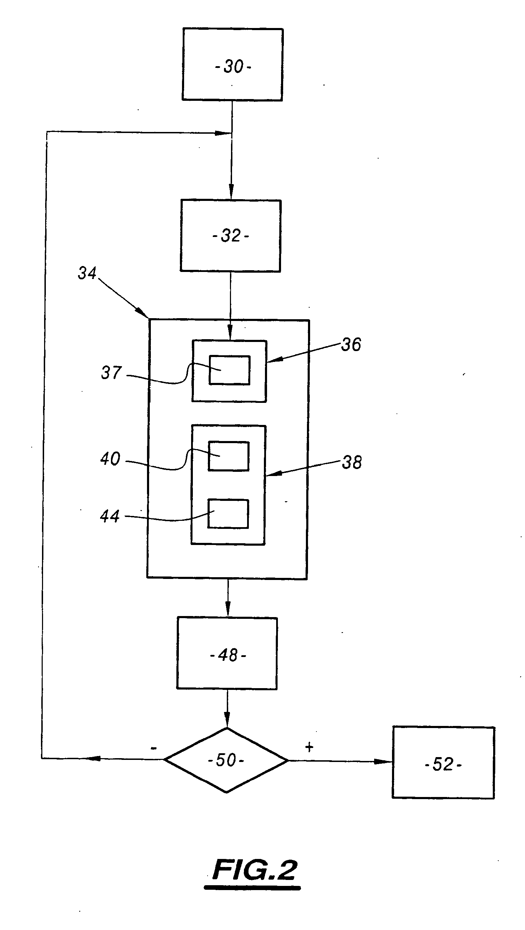

Le calculateur 12 est un calculateur programmable conventionnel apte à exécuter des instructions enregistrées sur un support d'enregistrement d'informations 14 associé à ce calculateur. Ici, le support d'enregistrement 14 comporte des instructions pour l'exécution du procédé de la figure 2 lorsque celles-ci sont exécutées par le calculateur 12.

Le système 4 comporte également un capteur 16 d'accélération latérale apte à mesurer la force centrifuge subie par le véhicule 2 lors d'un virage, et un capteur 18 de la position angulaire d'un volant 20 de direction du véhicule 2. La position angulaire du volant 20 détermine ici l'angle de braquage des roues avant du véhicule.

Le capteur 18 est par exemple propre à mesurer le déplacement angulaire du volant 20 lorsque celui-ci est tourné par le conducteur, par rapport à une position de référence correspondant à un déplacement du véhicule 2 en ligne droite.

Finalement, le système 4 comporte un capteur 21 conventionnel de distance parcourue et un indicateur d'alarmes 22 propre à indiquer au conducteur un sous-gonflage d'un des pneus du véhicule 2. Cet indicateur 22 est par exemple formé à partir de voyants lumineux, de sonneries ou de messages vocaux.

Les capteurs 16, 18, 21 et l'indicateur 22 sont raccordés au calculateur 12.

Le fonctionnement du système 4 va maintenant être décrit à l'aide de l'organigramme de la figure 2.

Initialement, par exemple, lors de la fabrication du véhicule, les données nécessaires à l'exécution de ce procédé d'indication d'un sous-gonflage d'un pneu sont enregistrées, lors d'une étape 30, par exemple sur le support d'enregistrement d'informations 14.

Ces données comportent notamment deux tableaux de correspondance.

Le premier tableau permet d'établir une correspondance entre la position angulaire du volant 20, mesurée par le capteur 18, et le rayon de courbure de la trajectoire suivie par chacune des roues. Ici, les rayons de courbure des trajectoires suivies par les roues avant gauche, avant droite et arrière gauche sont respectivement notés $R_\alpha$, R $\beta$ et R. La valeur de ces rayons de courbure pour chaque valeur de la position angulaire délivrée par le capteur 18 sont par exemple établies expérimentalement en mesurant pour chaque position angulaire du volant 20 le rayon de courbure correspondant pour chacune des roues.

Le second tableau établit la correspondance entre une variation du poids supporté par une roue et une variation du nombre de tours effectués par cette même roue en ligne droite pour un pneumatique de type donné et une pression donnée.

Ce second tableau est également, par exemple, établi de façon expérimentale. Pour établir ce second tableau, l'expérience consiste à relever, par exemple sur une distance de 1000 mètres parcourue en ligne droite, le nombre de tours réalisés par chaque roue lorsque le véhicule 2 n'est pas chargé. Ensuite, le même parcours est réalisé en faisant supporter par chacune des roues du véhicule un poids supplémentaire connu. La différence du nombre de tours de roue réalisés lors de ces deux parcours pour chacune des roues est relevée et associée au poids supplémentaire supporté par cette roue. En répétant cette expérience pour plusieurs poids supplémentaires différents, et en interpolant la courbe entre deux valeurs mesurées, un tableau indiquant pour chaque roue la variation du nombre de tours de roue en fonction du poids supplémentaire supporté par cette roue est établi. Pour chaque variation négative du poids, c'est-à-dire pour le cas d'un allègement du poids supporté par la roue, la variation du nombre de tours de roue correspondante est calculée par interpolation linéaire de la courbe.

Le fait d'utiliser de tels tableaux préenregistrés permet de gagner du temps lors des calculs mis en oeuvre dans les étapes suivantes.

Une fois que ces données ont été enregistrées sur le support d'enregistrement d'informations 14, le calculateur 12 peut procéder aux étapes suivantes.

Lorsque le véhicule 2 roule, le calculateur 12 acquiert, à l'étape 32, tous les intervalles de temps $t_0$, les données mesurées par les capteurs 10, 16, 18 et 21.

Cette acquisition est inhibée lorsque l'un au moins des pneus se trouve dans une phase de glissement sur la chaussée. Un tel glissement d'un des pneus est par exemple détecté si :

- l'accélération longitudinale du véhicule 2 est supérieure à un premier seuil correspondant à un glissement des roues motrices ou, au contraire, inférieure à un deuxième seuil correspondant par exemple à un freinage important ;
- l'accélération latérale du véhicule 2 est supérieure à un troisième seuil correspondant à un dérapage latéral des pneus :

  - le système de freinage ABS ou le système de stabilisation ESP, ou encore un système de répartition électronique de freinage REF, le système de contrôle du couple du moteur MSR ou le système d'anti-patinage ASR est activé ;
  - la vitesse de rotation du volant est supérieure à un seuil donné correspondant à une mise en vitesse de lacet brutale ;
  - la vitesse de lacet du véhicule est supérieure à un seuil donné ; ou
  - une roue n'est pas en contact avec le sol, par exemple dans le cas du rebond d'une roue sur une chaussée déformée.

Ensuite, il procède à une étape 34 de correction du nombre de tours de roue mesuré, acquis lors de l'étape 32.

Lors de cette étape 34, le calculateur 12 corrige, lors d'une sous-étape 36, les nombres de tours mesurés pour les roues de manière à compenser les écarts de nombre de tours de roue dus aux différentes distances parcourues par chacune de ces roues lors d'un virage.

A cet effet, à l'aide du premier tableau enregistré lors de l'étape 30, il détermine, lors d'une opération 37, les rayons de courbure $R_\alpha$, $R_\beta$ et R correspondant à la position angulaire mesurée par le capteur 18 à l'étape 32. Ensuite, il calcule la distance parcourue par chacune des roues du véhicule 2 à l'aide de la relation suivante :

$$\frac{d_\alpha}{R_\alpha} = \frac{d_\beta}{R_\beta} = \frac{d_g}{R} = \frac{d_d}{R - Var}$$

où :

- $d_\alpha$, , $d_\beta$, $d_g$ et $d_d$ correspondent respectivement aux distances parcourues par les roues avant gauche, avant droite, arrière gauche, arrière droite, et
- "Var" correspond à l'écartement des roues arrière. Sa valeur est positive pour un virage à droite et négative pour un virage à gauche.

Pour calculer les distances parcourues, la distance mesurée par le capteur 21 est, par exemple, affectée à dg. Ici et dans la suite du procédé, la roue arrière gauche est donc prise comme roue de référence.

Ensuite, le nombre de tours mesuré pour chacune des roues est corrigé en fonction des valeurs de $d_\alpha$ , $d_\beta$ et $d_d$ de manière à ce que celui-ci corresponde au nombre de tours de roue qui aurait été mesuré si la distance parcourue par chacune des roues était égale à la distance $d_g$.

On notera que la formule ci-dessus n'est valable que dans le cas d'un véhicule ayant des roues directrices seulement à l'avant. D'une manière plus générale, on a :

$$\frac{d_\alpha}{R_\alpha} = \frac{d_\beta}{R_\beta} = \frac{d_g}{R} = \frac{d_d}{R_d}$$

où $R_d$ est le rayon de courbure de la roue arrière droite.

Ensuite, toujours lors de l'étape 34, le calculateur 12 corrige une nouvelle fois, lors d'une sous-étape 38, les nombres de tours de roue déjà corrigés une première fois lors de la sous-étape 36, pour compenser les écarts de nombres de tours de roue entre les différentes roues dus à l'accélération latérale du véhicule lors d'un virage.

A cet effet, lors d'une opération 40, le calculateur établit pour chaque roue la différence entre le poids qu'aurait supporté cette roue en ligne droite et le poids supporté par cette même roue lors d'un virage à l'aide des formules suivantes, valables pour un essieu :

$$\Delta P_{\text{int}} = -m \times A_{lat} \times \frac{h}{V}$$

$$\Delta P_{ext} = +m \times A_{lat} \times \frac{h}{V}$$

où

- $\Delta P_{\text{int}}$ est la différence entre le poids supporté par une roue lorsque le véhicule se déplace en ligne droite et le poids supporté par cette même roue lorsque le véhicule réalise un virage pour une roue placée à l'intérieur du virage,
- m est la masse sur l'essieu,
- $A_{lat}$ est la valeur de l'accélération latérale mesurée par le capteur 16,
- h est la hauteur par rapport au sol du centre de gravité du véhicule 2,
- V est l'écartement entre la roue pour laquelle $\Delta P_{\text{int}}$ est établi et la roue opposée disposée sur le même axe,
- $\Delta P_{ext}$ est la différence entre le poids supporté par une roue lorsque le véhicule se déplace en ligne droite et le poids supporté par cette même roue lorsque le véhicule réalise un virage pour une roue placée à l'extérieur du virage.

On notera que m peut être la masse de l'essieu théorique ou son estimation, ou sa mesure.

$\Delta P_{\text{int}}$ et $\Delta P_{ext}$ correspondent chacun à une variation du poids supporté par une roue à cause d'une modification de la répartition du poids du véhicule sur ses roues, elle-même causée par l'accélération latérale subie par le véhicule lors d'un virage.

A partir de ces valeurs $\Delta P_{\text{int}}$ et $\Delta P_{ext}$ et du second tableau enregistré lors de l'étape 30, le calculatteur 12 corrige, lors d'une opération 44, les valeurs issues de la sous-étape 36 pour compenser les modifications de la répartition du poids du véhicule dans un virage. Par exemple, lors de l'opération 44, le calculateur 12 corrige les valeurs issues de la sous-étape 36 pour qu'elles correspondent aux valeurs qui auraient été obtenues si le véhicule se déplaçait en ligne droite.

A l'issue de l'étape 34, le calculateur 12 calcule, à l'étape 48, les écarts entre le nombre corrigé de tours de roue réalisés par la roue arrière gauche et les nombres corrigés de tours de roue réalisés par chacune des autres roues du véhicule 2.

Ensuite, le calculateur vérifie, à l'étape 50, si l'un des écarts calculés lors de l'étape 48 demeure, en valeur absolue, supérieur à un seuil prédéterminé $S_i$ pendant un laps de temps prédéterminé $\Delta T$. Dans la négative, le calculateur 12 retourne à l'étape 32.

Dans l'affirmative, c'est-à-dire si en valeur absolue l'un des écarts est supérieur au seuil prédéterminé $S_i$, le calculateur procède à une étape 52 d'indication d'un sous-gonflage d'un des pneus. Lors de cette étape 52, le calculateur commande l'indicateur 22 de manière à indiquer au conducteur quel est le pneu sous-gonflé. Plus précisément, si les écarts entre le nombre de tours de roue corrigé pour la roue de référence et ceux mesurés et corrigés pour les autres roues sont tous supérieurs au seuil prédéterminé $S_i$, alors le calculateur 12 commande l'indicateur 22 pour signaler au conducteur que la roue de référence, c'est-à-dire ici la roue arrière gauche, est sous-gonflée.

Dans les autres cas, c'est-à-dire ceux où un seul des écarts calculés est supérieur au seuil prédéterminé $S_i$, le calculateur commande l'indicateur 22 pour signaler au conducteur la roue qui présente un nombre de tours mesuré et corrigé supérieur à celui de la roue de référence.

Ainsi, contrairement au système divulgué dans FR-A-2 568 519, le système 4 est ici capable d'indiquer précisément quel est l'unique pneu sous-gonflé.

De plus, il peut détecter et localiser non seulement une roue défaillante, mais aussi deux ou trois roues défaillantes ou un essieu défaillant.

Le procédé décrit détermine un sous-gonflage d'un pneu en traitant directement le nombre de tours roues réalisés sur une distance donnée. Ce procédé ne nécessite donc pas le calcul ou la mesure d'une vitesse angulaire pour chaque roue. Cela simplifie les calculs et donc le procédé puisque le nombre de tours de roue est facilement mesurable, voire déjà disponible auprès d'autres systèmes (par exemple, d'un système de freinage ABS) dont est équipé le véhicule. Cette simplification procure un certain nombre d'avantages par rapport aux systèmes et procédés de détection d'un sous-gonflage connus qui utilisent la vitesse angulaire comme celui décrit dans EP 0 712 740. En particulier, à cause de sa simplicité, l'espace de stockage nécessaire pour enregistrer le procédé décrit ici est réduit et sa vitesse d'exécution est accrue. De plus, l'étalonnage des capteurs et du procédé est simplifié.

Le système 4 a été décrit ici dans le cas particulier où un tableau de correspondance entre la position angulaire du volant 20 et les rayons de courbure $R_{\alpha}$, $R_{\beta}$ et R est préenregistré. En variante, le système 4 ne comporte pas un tel tableau préenregistré et les rayons de courbure des trajectoires des roues avant gauche, avant droite et arrière gauche sont calculés à chaque fois qu'une nouvelle valeur est nécessaire pour ces rayons de courbure à partir d'une formule mathématique reliant la position angulaire du volant mesurée aux rayons de courbure de la trajectoire des roues. Une telle formule est par exemple établie à l'aide de l'épure de Jeantaud ou de son application au type de véhicule considéré.

De même, en ce qui concerne le transfert de charge, on peut soit utiliser des tableaux préétablis, soit le calculer à chaque fois.

Le procédé objet de l'invention est simple et fiable puisqu'on corrige facilement les écarts dus aux situations de virage et qu'on filtre les informations correspondant à une situation où le pneu est en état de glissement.

## Revendications

1. Procédé d'indication d'un sous-gonflage d'un pneu d'une roue d'un véhicule automobile en cas de détection d'une variation anormale du nombre de tours de roue réalisés sur une distance donnée, ce procédé comportant les étapes suivantes :

   - une étape de mesure du nombre de tours de roue réalisés par chaque roue du véhicule :
   - une étape d'acquisition (32) d'une information représentative de l'accélération latérale du véhicule automobile et, pour chaque roue, du nombre de tours de roues mesuré et d'une information représentative du rayon de courbure de la trajectoire suivie par cette roue lors d'un virage ;
   - une première étape de correction (36), corrigeant à l'aide de l'information représentative du rayon de courbure les nombres de tours de roues mesurés à l'aide de ladite information acquise pour chacune des roues, de manière à compenser les écarts entre les nombres de tours de roue mesurés pour chaque roue dus au fait que les roues parcourent des distances différentes lors d'un virage ;
   - une seconde étape de correction (38), corrigeant à l'aide de l'information représentative de l'accélération latérale les nombres de tours de roues mesurés à l'aide de ladite information acquise pour chacune des roues, de manière à compenser les écarts entre les nombres de tours de roue mesurés pour chaque roue dus à l'accélération latérale du véhicule lors d'un virage ;
   - une étape de calcul (48) des écarts entre le nombre de tours de roues mesuré pour une roue de référence et les nombres de tours de roue mesurés et corrigés pour les autres roues du véhicule automobile de manière à détecter ladite variation anormale de tours de roue.

2. Procédé selon la revendication 1, **caractérisé en ce qu'**il comporte en outre, une étape (50,52) de détermination de la roue sous-gonflée après comparaison des écarts mesurés à l'étape de calcul des écarts (48) et un seuil déterminé (Si) et si, ces écarts sont tous supérieurs au seuil prédéterminé (Si) alors c'est la roue de référence qui est signalée sous-gonflée, sinon, dans les autres cas où un seul des écarts calculés est supérieur au seuil prédéterminé (Si), alors c'est la roue qui présente un nombre de tours mesuré et corrigé supérieur à la roue de référence qui est signalée sous-gonflée.

3. Procédé selon la revendication 1, **caractérisé en ce que** la première étape de correction (36) consiste à corriger les nombres de tours de roue mesurés pour que ceux-ci correspondent aux nombres de tours qui auraient été mesurés si toutes les roues avaient parcouru une même distance de référence.

4. Procédé selon la revendication 3, **caractérisé en ce que** la distance de référence est choisie égale à la distance parcourue par le véhicule.

5. Procédé selon l'une des revendications précédentes, **caractérisé en ce que** l'étape d'acquisition (32) comporte :

   - une opération de mesure de la position angulaire du volant de direction du véhicule, et
   - une opération (37) de détermination du rayon de courbure de la trajectoire de chaque roue du véhicule à partir de la position angulaire du volant mesurée.

6. Procédé selon l'une quelconque des revendications précédentes, **caractérisé en ce que** la seconde étape de correction (38) comporte une opération (40) de calcul de la répartition du poids du véhicule automobile sur chacune des roues en fonction de l'accélération latérale.

7. Procédé selon l'une quelconque des revendications précédentes, **caractérisé en ce que** l'étape de mesure du nombre de tours de roue, et l'étape d'acquisition (32) d'une information représentative du rayon de courbure, sont inhibées si l'un des pneus du véhicule automobile glisse sur la chaussée.

**8.** Système d'indication d'un sous-gonflage d'un pneu d'une roue d'un véhicule automobile en cas de détection d'une variation anormale du nombre de tours de roue réalisés sur une distance donnée, ce système comportant des moyens (10) de mesure du nombre de tours de roue réalisés par chaque roue du véhicule,
**caractérisé en ce qu'**il comporte :

- des moyens (18) pour relever, pour chaque roue, une information représentative du rayon de courbure de la trajectoire suivie par cette roue,
- un calculateur (12) mettant en oeuvre le procédé selon l'une quelconque des revendications 1 à 7.

**9.** Système selon la revendication 8, **caractérisé en ce que** le moyen pour relever une information représentative du rayon de courbure de la trajectoire suivie par chacune des roues comporte un capteur (18) de la position angulaire du volant du véhicule automobile.

**10.** Système selon la revendication 8 ou 9, **caractérisé en ce qu'**il comporte des moyens (16) d'acquisition d'une information représentative de l'accélération latérale du véhicule automobile, et **en ce que** le calculateur (12) est apte à corriger les nombres de tours de roue mesurés de manière à compenser les écarts entre les nombres de tours de roue mesurés pour chaque roue dus à l'accélération latérale du véhicule lors d'un virage.

## Claims

**1.** Method for indicating an under-inflation of a tyre of a wheel of an automobile vehicle in the case of detection of an abnormal variation in the number of wheel revolutions carried out over a given distance, this method comprising the following stages:

- a stage measuring the number of wheel revolutions carried out by each wheel of the vehicle,
- an acquisition stage (32) of representative information of the lateral acceleration of the automobile vehicle and, for each wheel, of the number of wheel revolutions measured and of representative information of the radius of curvature of the path followed by this wheel when cornering;
- a first correction stage (36), correcting by means of the representative information of the radius of curvature the number of wheel revolutions measured by means of the said acquired information for each of the wheels, so as to compensate for the gaps between the numbers of wheel revolutions measured for each wheel due to the fact that the wheels cover different distances when cornering;
- a second correction stage (38), correcting by means of the representative information of the lateral acceleration the numbers of wheel revolutions measured by means of the said acquired information for each of the wheels, so as to compensate for the gaps between the numbers of wheel revolutions measured for each wheel due to the lateral acceleration of the vehicle when cornering;
- a calculation stage (48) of the gaps between the number of wheel revolutions measured for a reference wheel and the numbers of wheel revolutions measured and corrected for the other wheels of the automobile vehicle, so as to detect the said abnormal variation of wheel revolutions.

**2.** Method according to Claim 1, **characterized in that** it further comprises a stage (50, 52) for determining the under-inflated wheel after comparison of the gaps measured at the gap calculation stage (48) and a determined threshold (Si) and if these gaps are all greater than the predetermined threshold (Si), then it is the reference wheel which is reported under-inflated, if not, in the other cases where a single one of the calculated gaps is greater than the predetermined threshold (Si), then it is the wheel which has a measured and corrected number of revolutions greater than the reference wheel which is reported under-inflated.

**3.** Method according to Claim 1, **characterized in that** the first correction stage (36) consists in correcting the numbers of measured wheel revolutions so that these correspond to the numbers of revolutions which would have been measured if all the wheels had covered the same reference distance.

**4.** Method according to Claim 3, **characterized in that** the reference distance is selected to be equal to the distance covered by the vehicle.

**5.** Method according to one of the preceding claims, **characterized in that** the acquisition stage (32) comprises:

- a measurement operation of the angular position of the steering wheel of the vehicle, and
- an operation (37) for determining the radius of curvature of the path of each wheel of the vehicle from the measured angular position of the steering wheel.

**6.** Method according to any one of the preceding claims, **characterized in that** the second correction stage (38) comprises an operation (40) for calculating the distribution of weight of the automobile vehicle on each of the wheels as a function of the lateral acceleration.

**7.** Method according to any one of the preceding claims, **characterized in that** the measuring stage of the number of wheel revolutions, and the acquisition stage (32) of representative information of the radius of curvature, are disabled if one of the tyres of the automobile vehicle slides on the roadway.

**8.** System for indicating an under-inflation of a tyre of a wheel of an automobile vehicle in the case of detection of an abnormal variation of the number of wheel revolutions carried out over a given distance, this system comprising means (10) for measuring the number of wheel revolutions carried out by each wheel of the vehicle,
**characterized in that** it comprises:

- means (18) to record, for each wheel, representative information of the radius of curvature of the path followed by this wheel,
- a calculator (12) implementing the method according to any one of Claims 1 to 7.

**9.** System according to Claim 8, **characterized in that** the means for recording representative information of the radius of curvature of the path followed by each of the wheels comprises a pickup (18) of the angular position of the steering wheel of the automobile vehicle.

**10.** System according to Claim 8 or 9, **characterized in that** it comprises means (16) for acquisition of representative information of the lateral acceleration of the automobile vehicle, and **in that** the calculator (12) is suited to correct the numbers of measured wheel revolutions so as to compensate for the gaps between the numbers of measured wheel revolutions for each wheel due to the lateral acceleration of the vehicle when cornering.

## Patentansprüche

**1.** Verfahren zur Anzeige eines Reifenunterdrucks eines Kraftfahrzeugrads beim Erfassen einer anormalen Variation der Anzahl Radumdrehungen, die auf einer gegebenen Entfernung ausgeführt werden, wobei das Verfahren die folgenden Schritte aufweist:

- einen Messschritt der Anzahl Radumdrehungen, die von jedem Rad des Fahrzeugs ausgeführt werden;
- einen Schritt des Erfassens (32) einer Information, die für die seitliche Beschleunigung des Kraftfahrzeugs repräsentativ ist, und, für jedes Rad, der gemessenen Anzahl Radumdrehungen und einer Information, die für den Krümmungsradius der Bahn, der dieses Rad in einer Kurve folgt, repräsentativ ist;
- einen ersten Korrekturschritt (36), der mit Hilfe der für den Krümmungsradius repräsentativen Information die gemessene Anzahl Radumdrehungen mit Hilfe der für jedes der Räder erfassten Information derart korrigiert, dass die Abweichungen zwischen den gemessenen Anzahlen Radumdrehungen für jedes Rad, die auf die Tatsache zurückzuführen sind, dass die Räder bei einer Kurve unterschiedliche Entfernungen zurücklegen, kompensiert werden;
- einen zweiten Korrekturschritt (38), der mit Hilfe der Information, die für die seitliche Beschleunigung repräsentativ ist, die gemessene Anzahl Radumdrehungen mit Hilfe der für jedes der Räder erfassten Information derart korrigiert, dass die Abweichungen zwischen den für jedes Rad gemessenen Anzahlen Radumdrehungen, die auf die seitliche Beschleunigung des Fahrzeugs bei einer Kurve zurückzuführen sind, kompensiert werden;
- einen Berechnungsschritt (48) der Abweichungen zwischen der gemessenen Anzahl Radumdrehungen für ein Bezugsrad und den gemessenen und korrigierten Anzahlen Radumdrehungen für die anderen Räder des Kraftfahrzeugs derart, dass die anormale Variation von Radumdrehungen erfasst wird.

**2.** Verfahren nach Anspruch 1, **dadurch gekennzeichnet, dass** es ferner einen Schritt (50, 52) des Bestimmens des Rads mit Unterdruck nach Vergleichen der im Berechnungsschritt (48) gemessenen Abweichungen mit einem festgelegten Schwellenwert (Si) aufweist, und, wenn diese Abweichungen alle größer sind als der vorbestimmte Schwellenwert (Si), es das Bezugsrad ist, das als einen Unterdruck aufweisend gemeldet wird, anderenfalls, in den anderen Fällen, in welchen eine einzige der berechneten Abweichungen größer ist als der vorbestimmte Schwellenwert (Si), es das Rad ist, das eine gemessene und korrigierte Anzahl Umdrehungen aufweist, die größer ist als beim Bezugsrad, das als einen Unterdruck aufweisend gemeldet wird.

**3.** Verfahren nach Anspruch 1, **dadurch gekennzeichnet, dass** der erste Korrekturschritt (36) darin besteht, die gemessenen Anzahlen Radumdrehungen zu korrigieren, damit diese den Anzahlen Umdrehungen entsprechen, die gemessen worden wären, wenn alle Räder eine gleiche Bezugsentfernung zurückgelegt hätten.

4. Verfahren nach Anspruch 3, **dadurch gekennzeichnet, dass** die Bezugsentfernung gleich der von dem Fahrzeug zurückgelegten Entfernung ausgewählt wird.

5. Verfahren nach einem der vorhergehenden Ansprüche, **dadurch gekennzeichnet, dass** der Erfassungsschritt (32) Folgendes aufweist:

   - einen Messvorgang der Winkelposition des Lenkrads des Fahrzeugs, und
   - einen Bestimmungsschritt (37) des Krümmungsradius der Bahn jedes Rads des Fahrzeugs ausgehend von der gemessenen Winkelposition des Lenkrads.

6. Verfahren nach einem der vorhergehenden Ansprüche, **dadurch gekennzeichnet, dass** der zweite Korrekturschritt (38) einen Berechnungsschritt (40) der Verteilung des Gewichts des Kraftfahrzeugs auf jedes der Räder in Abhängigkeit von der seitlichen Beschleunigung aufweist.

7. Verfahren nach einem der vorhergehenden Ansprüche, **dadurch gekennzeichnet, dass** der Messschritt der Anzahl Radumdrehungen und der Erfassungsschritt (32) einer Information, die für den Krümmungsradius repräsentativ ist, inhibiert werden, wenn einer der Reifen des Kraftfahrzeugs auf der Fahrbahn rutscht.

8. System zur Anzeige eines Reifenunterdrucks eines Reifens eines Kraftfahrzeugs beim Erfassen einer anormalen Variation der auf einer gegebenen Entfernung ausgeführten Anzahl von Radumdrehungen, wobei dieses System Mittel (10) zum Messen der Anzahl Radumdrehungen aufweist, die von jedem Rad des Fahrzeugs ausgeführt werden,
   **dadurch gekennzeichnet, dass** es Folgendes aufweist:

   - Mittel (18), um für jedes Rad eine Information zu erfassen, die für den Krümmungsradius der von diesem Rad verfolgten Bahn repräsentativ ist,
   - einen Rechner (12), der das Verfahren nach einem der Ansprüche 1 bis 7 ausführt.

9. System nach Anspruch 8, **dadurch gekennzeichnet, dass** das Mittel zum Messen einer Information, die für den Krümmungsradius der von jedem Rad verfolgten Bahn repräsentativ ist, einen Sensor (18) der Winkelposition des Lenkrads des Kraftfahrzeugs aufweist.

10. System nach Anspruch 8 oder 9, **dadurch gekennzeichnet, dass** es Mittel (16) zum Erfassen einer Information aufweist, die für die seitliche Beschleunigung des Kraftfahrzeugs repräsentativ ist, und dass der Rechner (12) die gemessenen Anzahlen Radumdrehungen derart korrigieren kann, dass die Abweichungen zwischen den für jedes Rad gemessenen Anzahlen Radumdrehungen, die auf die seitliche Beschleunigung des Fahrzeugs bei einer Kurve zurückzuführen sind, kompensiert werden.

10
14
-12-
22
2
18
21
16
20
4

FIG.1

-30-
-32-
34
36
37
40
38
44
-48-
-50-
-
+
-52-

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2568519 A
- EP 0712740 A
- EP 1336513 A